# EUROPÄISCHE PATENTSCHRIFT

(11) **EP 0 954 666 B1**
(45) Veröffentlichungstag und Bekanntmachung des Hinweises auf die Patenterteilung: **13.10.2004**
(21) Anmeldenummer: 97951115.1
(22) Anmeldetag: 11.12.1997
(51) Int. Cl.: E05B 49/00, B60R 25/04, G07C 9/00

(54) **BETÄTIGUNGSVORRICHTUNG FÜR EIN BERECHTIGUNGSSYSTEM**
CONTROL DEVICE FOR AN AUTHORIZATION SYSTEM
DISPOSITIF DE COMMANDE POUR SYSTEME D'AUTORISATION

(30) Priorität: 20.01.1997 DE 19701740
(43) Veröffentlichungstag der Anmeldung: 10.11.1999
(73) Patentinhaber: ROBERT BOSCH GMBH, 70442 Stuttgart (DE)
(72) Erfinder: HACKER, Heidrun, D-71282 Hemmingen (DE); SCHMITZ, Stefan, D-70197 Stuttgart (DE)
(86) Internationale Anmeldenummer: PCT/DE1997/002880
(87) Internationale Veröffentlichungsnummer: WO 1998/031900

(56) Entgegenhaltungen:
- EP-A- 0 285 419
- EP-A- 0 440 974
- EP-A- 0 565 469
- WO-A-90/08242
- WO-A-92/18732
- DE-A- 4 429 418
- FR-A- 2 573 881

## Beschreibung

### Stand der Technik

Die Erfindung betrifft eine Betätigungsvorrichtung für ein Berechtigungssystem mit einer Steuereinrichtung, einer Sende/Empfangseinrichtung zur Kommunikation mit einer Basisstation des Berechtigungssystems und einer Codier- und Decodiereinrichtung, die eine Codierung/Decodierung auf der Grundlage eines Schlüsselcodes durchführt.

Derartige auch als Transponder bekannte Betätigungsvorrichtungen sind bekannt, beispielsweise aus der EP 0 285 419 A2, und dienen quasi als Schlüssel, beispielsweise zum berechtigten Öffnen von Türen. Im Kfz-Bereich werden solche berührungslos arbeitenden Berechtigungssysteme mehr und mehr zur Aktivierung/Deaktivierung einer Wegfahrsperre eingesetzt. Zur Überprüfung der Berechtigung wird dazu eine Zufallszahl bestimmter Wortlänge von einer festinstallierten Basisstation an den Transponder übertragen und dort mittels eines vorbestimmten Schlüsselcodes codiert und an die Basisstation zurückgesendet. Dieser Vorgang, d.h. das Senden einer Zufallszahl und das Zurücksenden der codierten Zahl wird im folgenden als Protokoll bezeichnet. Unter einem kurzen Protokoll ist in diesem Zusammenhang zu verstehen, daß die Wortlänge der Zufallszahl klein und folglich die Übertragungsdauer kurz ist. Ein langes Protokoll bedeutet, daß eine Zufallszahl mit langer Wörtlänge in einem oder mehrerer Blöcken übertragen wird. Die Übertragungszeit eines langen Protokolls ist folglich entsprechend länger.

Ergibt der Vergleich der in dem Transponder mit Hilfe des vorbestimmten Schlüsselcodes berechneten Datums mit einem in der Basisstation aus der Zufallszahl berechneten Erwartungsdatum eine Übereinstimmung, liegt eine Berechtigung vor und die gewünschte Aktion, in diesem Fall das Starten des Fahrzeugs, kann ausgeführt werden.

Um eine möglichst hohe Sicherheit zu erhalten, werden lange Protokolle gewählt, d.h. die Wortlänge der Zufallszahl und entsprechend auch des Schlüsselcodes im Transponder ist groß. Eine entsprechend lange Verarbeitungszeit für die Kommunikation und die Verschlüsselung im Transponder ist. die Folge, was bei einem Berechtigungssystem für das Anlassen des Motors jedoch unkritisch ist.

Aus der EP-A-0 565 469, der WO-A-90/08242 und der EP-A-0 285 419 ist es bekannt, derartige berührungslos arbeitende Berechtigungssysteme auch für die Zugangsberechtigung zu Fahrzeugen, das heißt, für das Öffnen der Türverriegelungen einzusetzen. Soll hierfür der gleiche Transponder wie für die Berechtigung zum Anlassen des Motors benutzt werden, ergibt sich das Problem, daß die Kommunikation und die Verarbeitung im Transponder aufgrund der großen Wortlänge, d.h. des langen Protokolls lange dauert und für den Benutzer, der das Fahrzeug betreten möchte, als unangenehm empfunden wird.

Die Aufgabe der vorliegenden Erfindung besteht deshalb darin, eine Betätigungsvorrichtung für ein Berechtigungssystem zu schaffen, die eine schnelle Verarbeitung und Kommunikation bei zeitkritischen Berechtigungsanfragen ermöglicht und dennoch eine hohe Sicherheit gewährleistet.

Die Aufgabe wird durch eine Betätigungsvorrichtung gelöst, die die Merkmale des Anspruchs 1 aufweist. Die Betätigungsvorrichtung zeichnet sich dadurch aus, daß eine Auswahleinrichtung vorgesehen ist, die aus zumindest zwei unterschiedlich langen Protokollen ein Protokoll auswählt, d.h., daß die Betätigungsvorrichtung codierte Zufallszahlen unterschiedlicher Wortlänge zurücksenden kann, abhängig von der Wortlänge der empfangenen Zufallszahl oder abhängig von zugesandten Befehlen. Hiermit läßt sich für eine erste Berechtigungsstufe, beispielsweise die Türverriegelung, eine Zufallszahl und ein Schlüsselcode mit kleiner Wortlänge und entsprechend kurzer Verarbeitungszeit nutzen, während für eine zweite Berechtigungsstufe, beispielsweise das Starten des Motors, eine Zufallszahl und ein Schlüsselcode mit langer Wortlänge und sehr hoher Sicherheit mit entsprechend längerer Verarbeitungszeit eingesetzt werden können. Es wird also gemäß den Merkmalen des Anspruchs 7 ein mehrstufiges, vorzugsweise zweistufiges Berechtigungssystem realisiert, das sich mit einem einzigen Transponder bedienen läßt, ohne Abstriche bezüglich Sicherheit und Komfort machen zu müssen.

Diesem erfindungsgemäßen zweistufigen Berechtigungssystem liegt der Gedanke zugrunde, daß die Sicherheitsanforderungen an die erste Stufe (Zugangsberechtigung), beispielsweise an das Öffnen der Türen, geringer zu wählen sind als die Sicherheitsanforderung an die zweite Stufe (Fahrzeugberechtigung), da die erste Stufe sehr einfach durch Zerstören einer Scheibe überwunden werden könnte. Beim Starten des Motors gibt es jedoch keine Möglichkeit, das Berechtigungssystem zu umgehen.

Vorteilhafte Ausgestaltungen der Erfindung ergeben sich aus den Unteransprüchen.

### Zeichnung

Die Erfindung wird nun anhand eines Ausführungsbeispiels mit Bezug auf die Zeichnungen näher erläutert. Dabei zeigen:
- Figur 1: ein Blockdiagramm einer Betätigungsvorrichtung und einer Basisstation, und
- Figur 2: eine schematische Darstellung einer Auswahlvorrichtung.

### Ausführungsbeispiele

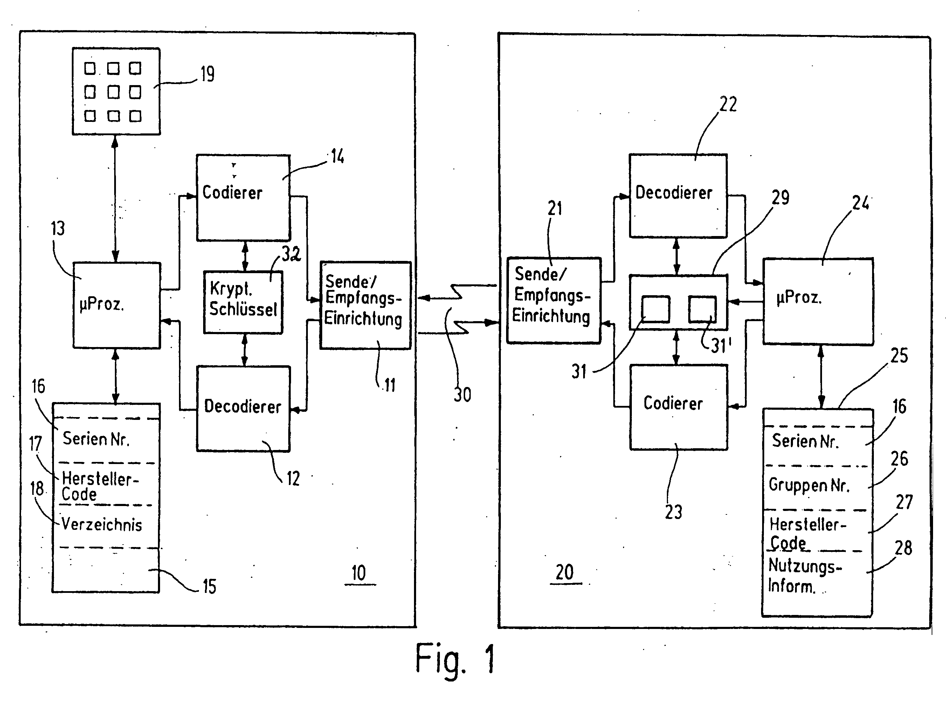

In Figur 1 ist eine Basisstation 10 und eine Betätigungsvorrichtung (Transponder) 20 dargestellt.

Bei der Basisstation 10 handelt es sich beispielsweise um eine Zugangskontrolleinrichtung für ein Kraftfahrzeug oder Gebäude, ein Computer öder andere Konsumgüter. Bei der der Basisstation 10 funktionell zugeordneten Betätigungsvorrichtung 20 handelt es sich beispielsweise um einen Transponder, der bei einem Kraftfahrzeug beispielsweise die Funktion eines Schlüssels übernimmt.

Die Basisstation 10 umfaßt eine Sende/Empfangseinrichtung 11 zur Abgabe beziehungsweise Entgegennahme von über eine Funkstrecke 30 berührungslos übertragbaren Signalen. Mit ihrem Ausgang verbunden ist ein Decodierer 12, der von der Sende/Empfangseinrichtung 11 empfangene, verschlüsselte Signale zur Decodierung erhält. Zur Durchführung der Entschlüsselung ist dem Decodierer 12 ein Speicher 32 mit dazu notwendigen Informationen, insbesondere in Form eines kryptischen Schlüsselcodes, zugeordnet. Die entschlüsselten Signale werden einem nachgeschalteten Mikroprozessor 13 zugeführt, welcher sie auswertet und in Abhängigkeit vom Ergebnis der Auswertung Folgemaßnahmen einleitet. Eine solche Folgemaßnahme könnte beispielsweise in der Freigabe der Türverriegelung oder in der Freigabe der Anlaßfunktion bestehen. Mittels einer dem Mikroprozessor zugeordneten nicht dargestellten Auswahleinrichtung ist es möglich, ein Protokoll bestimmter Länge auszuwählen. Vorzugsweise läßt sich die Wortlänge "der an die Betätigungsvorrichtung 20 zu übertragenden Zufallszahl einstellen. Ferner kontrolliert der Mikroprozessor 13 insbesondere die Abgabe von Signalen über die Sende/Empfangseinrichtung 11. Ihm ist ebenfalls ein Speicher 15 zugeordnet, in dem beispielsweise eine Seriennummer 16, ein Herstellercode 17 sowie ein Verzeichnis 18 mit den Gruppen der der Basisstation 10 zugeordneten Betätigungsvorrichtung 20 abgelegt sind. Der Herstellercode 17 wird dabei durch den Hersteller der Basisstation vergeben und bezeichnet sie eindeutig. Die Seriennummer 16 ist charakteristisch für einander zugeordnete Basisstationen 10 und Bestätigungsvprrichtungen 20, die Gruppennummern dienen zur Unterscheidung von einer gemeinsamen Basisstation 10 zugeordneten Betätigungsvorrichtung 20 mit gleichen Seriennummern. Die von der Sende/Empfangseinrichtung 11 zu übertragenden Signale werden in der Regel verschlüsselt. Zwischen Mikroprozessor 13 und Sende/Empfangseinrichtung 11 ist hierfür ein Codierer 14 geschaltet, der zur Durchführung der Codierung ebenfalls mit dem Speicher 32 verbunden ist. Desweiteren verfügt die Basisstation 10 über eine Eingabeeinrichtung 19, um einem Benutzer einen Zugang zu dem Mikroprozessor 13 zu ermöglichen. Die Eingabeeinrichtung 19 kann beispielsweise, wie in Figur 1 angedeutet, als Tastenfeld ausgeführt sein. Selbstverständlich sind beliebig andere Ausge-staltungen ebenso möglich.

Die Betätigungsvorrichtung 20 umfaßt eine zur basisseitigen Sende/Empfangseinrichtung 11 korrespondierende Sende/Empfangseinrichtung 21 zum Empfang von von der Basisstation 10 abgegebenen Signalen beziehungsweise zur Abgabe von berührungslos übertragbaren Signalen an die Basisstation 10. Analog zur Basisstation ist der Sende/Empfangseinrichtung 21 ein Decodierer 22 zur Entschlüssung codierter Signale nachgeschaltet. Zur Durchführung der Decodierung ist der Decodierer 22 mit einer Auswahlvorrichtung 29 verbunden, die zumindest einen Speicher 31 besitzt, dessen Inhalt dem des Speichers der Basisstation 10 entspricht. Bei dem im Speicher 31 abgelegten Datum handelt es sich um den in der Basisstation 10 verwendeten kryptischen Schlüsselcode. Mit dem Decodierer 22 weiterhin verbunden ist ein Mikroprozessor 24, welcher über die Sende/Empfangseinrichtung 21 und den Decodierer 22 eingegangene Signale verarbeitet und abhängig vom Ergebnis Folgemaßnahmen einleitet. Diese Folgemaßnahmen bestehen insbesondere in der Rücksendung eines berechneten Antwort-Signals (Response), das bei dem bekannten Anfrage-Antwort-Protokoll (Challenge-Response) verwendet wird. Die Wortlänge des Response-Signals wird dabei von der Auswahlvorrichtung 29 bestimmt, abhängig von der Wortlänge des Anfrage-Signals (Challenge) oder abhängig von zuvor gesandten Befehlen (precommands), so daß die Betätigungsvorrichtung 20 in der Lage ist, unterschiedliche von der Basisstation 10 vorgegebene Protokolle auszuführen. Der Mikroprozessor 24 kontrolliert insbesondere die Signalabgabe an die Basisstation 10 über die Sende/Empfangseinrichtung 21. Sie erfolgt, um Abhören oder Nachahmen auszuschließen, in der Regel in verschlüsselter Form. Zu diesem Zweck ist zwischen Mikroprozessor 24 und Sende/Empfangseinrichtung 21 -analog zur Basisstation- ein Codierer 23 geschaltet, der zur Durchführung der Codierungsfunktion gleichfalls mit der Auswahlvorrichtung 29 verbunden ist. Dem Mikroprozessor 24 ist weiterhin eine Speichereinrichtung 25 zugeordnet. Sie umfaßt insbesondere einen Speicherplatz 16 zur Ablage einer Seriennummer, einen Speicherplatz 26 zur Ablage einer Gruppennummer sowie einen Speicherplatz 27 zur Ablage eines Herstellercodes. Letzterer wird durch den Hersteller der Betätigungsvorrichtung 20 vergeben und bezeichnet diese eindeutig. Die Seriennummer ist ein für die aus der Basisstation 10 und die Betätigungsvorrichtung 20 bestehende Gesamtvorrichtung charakteristischer Code. Sie wird zweckmäßig vom Hersteller oder gegebenenfalls vom Anwender der Gesamtvorrichtung festgelegt und ist identisch mit der in der Basisstation 10 vorhandenen Seriennummer 16. Die Gruppennummer dient zur Unterscheidung mehrerer, dieselbe Seriennummer aufweisender Betätigungsvorrichtungen 20. Sie wird bei der Nutzung der Vorrichtung durch den Anwender festgelegt. Im Speicher 25 befinden sich weiterhin Nutzungsinformationen 28 zur Definition des Funktionsumfanges der jeweiligen Betätigungsvorrichtung 20. Beispielsweise kann bei Verwendung in einem Fahrzeug durch die Nutzungsinformation 28 der Aktionsradius für die Gültigkeit einer Betätigungsvorrichtung 20 auf einen bestimmten Wert eingeschränkt werden. In alternativer Ausgestaltung können die Nutzungsinformationen 28 auch in der Basisstation 10 in deren Speicher abgelegt sein.

In Figur 1 ist zu erkennen, daß die Auswahlvorrichtung 29 neben dem Speicher 31 einen weiteren Speicher 31' zur Speicherung eines weiteren Schlüsselcodes aufweist.

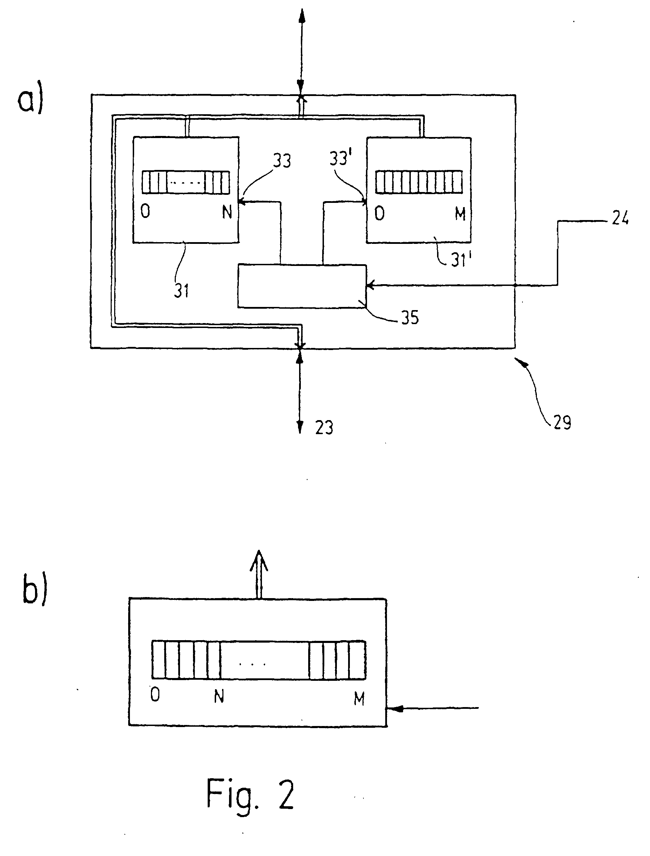

Figur 2a zeigt eine detaillierte Darstellung der Auswahlvorrichtüng 29 als Blockdiagramm. Zu erkennen sind die beiden Speicher 31 und 31', wobei der Speicher 31 zur Speicherung eines Datums mit der Wortlänge N und der Speicher 31' zur Speicherung eines Datums mit der Wortlänge M ausgebildet sind. Im vorliegenden Ausführungsbeispiel ist N kleiner M. Beide Speicher sind über entsprechende Leitungen mit dem Decodierer 22 und dem Codierer 23 verbunden. Jeder der beiden Speicher 31, 31' verfügt über einen Steuereingang 33, 33', der jeweils mit einer Aktivierungsschaltung 35 verbunden ist. Die Aktivierungsschaltung 35 empfängt ihrerseits ein Steuersignal vom Mikroprozessor 24. Ein entsprechendes Signal an einem der Steuereingänge 33, 33' sorgt dafür, daß der Inhalt des entsprechenden Speichers an den Codierer 23 und den Decodierer 22 übertragen wird. Für die Funktionsweise der Codierung ist es wichtig, daß immer nur der Inhalt eines Speichers übertragen wird.

Zwischen Basisstation 10 und der Bestätigungsvorrichtung 20 besteht eine Funkstrecke 30 zur Übertragung berührungslos übertragbarer Signale zwischen der basisseitigen Sende/Empfangseinrichtung 11 und der betätigungsvorrichtungsseitigen Sende/Empfangseinrichtung 21. Von der basissseitigen Sende/Empfangseinrichtung 11 ausgehende Signale erreichen dabei gleichzeitig alle innerhalb ihrer Reichweite befindlichen Betätigungsvorrichtungen 20. Als Signale werden zweckmäßig Infrarotsignale oder Hochfrequenzsignale eingesetzt.

Auf die genaue Kommunikation zwischen Basisstation 10 und Betätigungsvorrichtung 20, die entsprechende Auswahl einer der angesprochenen Betätiaunasvorrichtungen 20 und den Ablauf des Challenge-Response-Protokolls soll an dieser Stelle nicht näher eingegangen werden.

Nachdem die Basisstation 10 ein sogenanntes "Wakeup-Signal" gesendet und die jeweiligen Betätigungsvorrichtungen 20 reagiert haben, wählt die Basisstation 10 eine bestimmte Betätigungsvorrichtung 20 aus. Anschließend sendet die Basisstation 10 eine Zufallszahl mit einer Wortlänge P unverschlüsselt über die Funkstrecke 30, die von der ausgewählten Betätigungsvorrichtung 20 empfangen wird. Entsprechend dem Challenge-Response-Protokoll wird diese Zufallszahl vom Codierer 23 mittels eines Schlüsselcodes codiert und an die Basisstation 10 zurückübertragen. Dort wird diese zurückgesendete Response mit einer aus der. Zufallszahl und dem Schlüsselcode berechneten erwarteten Response verglichen. Stellt man eine Übereinstimmung fest, handelt es sich um die richtige Betätigungsvorrichtung, so daß die von der Basisstation 10 abgesetzte Berechtigungsanfrage als positiv beantwortet gilt. Die Basisstation 10 kann daraufhin die geplante Folgemaßnahme aktivieren.

Wie bereits erwähnt, umfaßt die Betätigungsvorrichtung 20 eine Auswahlvorrichtung 29, die mehrere Speicher 31, 31' mit entsprechend unterschiedlich langen Schlüsselcodes umfaßt. Zur richtigen Codierung der von der Basisstation 10 übertragenen Zufallszahl ist es notwendig, daß derjenige Schlüsselcode zur Codierung herangezogen wird, der mit jenem Schlüsselcode der Basisstation 10 übereinstimmt. Hierzu wird vor dem Absenden der Zufallszahl ein sogenanntes "Precommand" übertragen, das den Mikroprozessor 24 der Betätigungsvorrichtung 20 veranlaßt, über die Steuerungsschaltung 35 und die Steuereingänge 33, 33' einen der Speicher 31, 31' auszuwählen.

Die Verwendung einer Auswahlvorrichtung 29 mit mehreren Speichern 31, 31' ermöglicht es also, ein mehrstufiges Berechtigungssystem mit mehreren Basisstationen aufzubauen, das jedoch mit einer einzigen Betätigungsvorrichtung 20 zu bedienen ist, obgleich unterschiedliche Wortlängen benutzt werden.

Soll ein mehrstufiges Berechtigungssystem beispielsweise in einem Kfz eingesetzt werden, so wird eine Basisstation für die Zugangsberechtigung und eine weitere Basisstation für die Fahrzeugberechtigung vorgesehen. Die erste Basisstation arbeitet dabei mit einem Schlüsselcode der Wortlänge N, da eine schnelle Verarbeitung gefordert ist, während die zweite Basisstation mit einer Wortlänge M arbeitet, da hier hohe Sicherheitsanforderungen gestellt werden.

Sobald eine Verbindung zwischen der ersten Basisstation und der Betätigungsvorrichtung 20 hergestellt ist, wird das Precommand an die Betätigungsvorrichtung 20 übertragen, so daß dort beispielsweise der Speicher 31 ausgewählt wird, der den identischen Schlüsselcode zu der ersten Basisstation mit der Wortlänge N speichert. Ist die Berechtigungsabfrage positiv verlaufen, veranlaßt die Basisstation beispielsweise das Öffnen der Türverriegelung, so daß das Fahrzeug betreten werden kann.

Gibt der Besitzer den eindeutigen Hinweis, das Fahrzeug starten zu wollen, wird die zweite Basisstation mit der Betätigungsvorrichtung 20 Kontakt suchen und vor dem Starten des Challenge-Response-Protokolls als Precommand ein Signal senden, das den Mikroprozessor 24 der Betätigungsvorrichtung 20 veranlaßt, über die Auswahlvorrichtung 29 den Speicher 31' auszuwählen. In diesem Speicher ist ein Schlüsselcode der Wortlänge M abgelegt, der dem Schlüsselcode der zweiten Basisstation entspricht. Da an das Anlassen des Motors höhere Sicherheitsanforderungen gestellt werden, ist die Wortlänge M deutlich größer als die Wortlänge N des der ersten Basisstation zugehörigen Schlüsselcodes.

Eine Reduzierung der Speicherplätze 31 läßt sich realisieren, wenn -wie in Figur 2b dargestellt- ein Bit-Abschnitt der Länge N für beide Schlüsselcodes benutzt wird.

Das vorgenannte Ausführungsbeispiel umfaßt zwei Basisstationen, die mittels einer Betätigungsvorrichtung 20 zu bedienen sind. Selbstverständlich läßt sich ein solches Berechtigungssystem auch um weitere Basisstationen erweitern, die mit unterschiedlichen Schlüsselcodes arbeiten. Hierfür muß lediglich zusätzlicher Speicherplatz in der Betätigungsvorrichtung 20 vorgesehen und die Auswahlvorrichtung 29 entsprechend angepaßt werden.

Desweiteren ist es auch denkbar, daß zur Steigerung der Sicherheit eine wechselseitige Identifikation von Betätigungsvorrichtung 20 und Basisstation 10 einsetzbar ist.

## Patentansprüche

1. Betätigungsvorrichtung (20) für ein Berechtigungssystem
- mit einer Sende/Empfangseinrichtung (21) zum Empfang von einer Basisstation (10) abgegebenen Signalen und der Abgabe von Signalen an die Basisstation (10),
- mit einer Decodiereinrichtung (22), die die von der Basisstation (10) abgegebenen Signale decodiert,
- mit einer Steuereinrichtung (24), die die über die Sende/Empfangseinrichtung (21) und die Decodiereinrichtung (22) eingehenden Signale verarbeitet,
- mit einer Codiereinrichtung (23), die eine Codierung der an die Basisstation (10) abzugebenden Signale mittels eines Schlüsselcodes durchführt,
**gekennzeichnet durch**
- eine Auswahleinrichtung (29), die die Wortlänge des abzugebenden Signals bestimmt, indem die Auswahleinrichtung (29) zur Auswahl des Schlüsselcodes aus zumindest zwei unterschiedlich langen Schlüsselcodes ausgebildet ist, und die Auswahleinrichtung (29) weiterhin ausgebildet ist zur Auswahl eines Schlüsselcodes abhängig von einem Signal der Steuereinrichtung (24).

2. Betätigungsvorrichtung (20) nach Anspruch 1, **dadurch gekennzeichnet, dass** eine Verifikation mit der Basisstation (10) mittels eines Anfrage-Antwort-Protokolls (Challenge-Response) erfolgt.

3. Betätigungsvorrichtung (20) nach einem der vorhergehenden Ansprüche, **dadurch gekennzeichnet, dass** eine wechselseitige Verifikation zwischen Betätigungsvorrichtung (20) und Basisstation (10) erfolgt.

4. Betätigungsvorrichtung (20) nach einem der vorhergehenden Ansprüche, **dadurch gekennzeichnet, dass** der Steuereinrichtung (24) eine Speichereinrichtung (25) zugeordnet ist, in der zumindest ein Seriennummer-Datum abgelegt ist.

5. Betätigungsvorrichtung (20) nach einem der vorhergehenden Ansprüche, **dadurch gekennzeichnet, dass** die Kommunikation zwischen Betätigungsvorrichtung (20) und Basisstation (10) berührungslos mittels Infrarot- oder Hochfrequenzsignalen erfolgt.

6. Berechtigungssystem, bestehend aus mindestens einer Betätigungsvorrichtung (20) mit jeweils einer Sende/Empfangseinrichtung (21) zum Empfang von einer Basisstation (10) abgegebenen Signalen und der Abgabe von Signalen an die Basisstation (10),
- mit jeweils einer Decodiereinrichtung (22), die die von der Basisstation (10) abgegebenen Signale decodiert,
- mit jeweils einer Steuereinrichtung (24), die die über die Sende/Empfangseinrichtung (21) und die Decodiereinrichtung (22) eingehenden Signale verarbeitet,
- mit jeweils einer Codiereinrichtung (23), die eine Codierung der an die Basisstation (10) abzugebenden Signale mittels eines Schlüsselcodes durchführt und
- mit einer Basisstation (10), bestehend aus
- einer Steuereinrichtung (13)
- einer Sende/Empfangseinrichtung (11) zur Kommunikation mit der zumindest einen Betätigungsvorrichtung (20) und einer Codier- und Decodiereinrichtung (14, 12), die eine Codierung/Decodierung mittels eines Schlüsselcodes durchführt, wobei die Basisstation (10) ein
- Befehlssignal an die zumindest eine Betätigungsvorrichtung (20) sendet, in Abhängigkeit dessen eine Auswahleinrichtung (29) der zumindest einen Betätigungsvorrichtung (20) zur Auswahl des Schlüsselcodes aus mindestens zwei unterschiedlich langen Schlüsselcodes ausgebildet ist, und die Auswahleinrichtung (29) der zumindest einen Betätigungsvorrichtung (20) zur Auswahl eines Schlüsselcodes abhängig von einem Signal der Steuereinrichtung (24) ausgebildet ist.

7. Mehrstufiges Berechtigungssystem mit zumindest einer Betätigungsvorrichtung (20) gemäß einem der Ansprüche 1 bis 5 und zumindest zwei Basisstationen (10), wobei die Basisstationen (10) unterschiedlich lange Schlüsselcodes speichern,
**dadurch gekennzeichnet, dass**
die zumindest eine Betätigungsvorrichtung (20) für jede Basisstation (10) einen Speicher (31, 31') aufweist, der den der Basisstation (10) entsprechenden Schlüsselcode speichert, wobei für eine erste Berechtigungsstufe ein im Speicher (31) der Betätigungsvorrichtung (20) abgelegter Schlüsselcode mit einer Wortlänge N der ersten Basisstation (10) und für die zumindest eine weitere Berechtigungsstufe ein im Speicher (31') der Betätigungsvorrichtung (20) abgelegter Schlüsselcode mit einer Wortlänge M der zumindest einen weiteren Basisstation (10) zugeordnet ist.

8. Mehrstufiges Berechtigungssystem nach Anspruch 7, **dadurch gekennzeichnet, dass** die Wortlänge M des der zumindest einen weiteren Basisstation (10) zugehörigen Schlüsselcodes deutlich größer ist als die Wortlänge N des der ersten Basisstation (10) zugehörigen Schlüsselcodes.

## Claims

1. Operating apparatus (20) for an authorization system,
- having a transmission/reception device (21) for receiving signals which are sent by a base station (10) and for sending signals to the base station (10),
- having a decoding device (22) which decodes the signals which are sent by the base station (10),
- having a control device (24) which processes the signals arriving via the transmission/reception device (21) and the decoding device (22),
- having a coding device (23) which uses a key code to code the signals which are to be sent to the base station (10),
**characterized by**
- a selection device (29) which determines the word length of the signal which is to be sent by virtue of the selection device (29) being designed to select the key code from at least two key codes of different length, and the selection device (29) also being designed to select a key code on the basis of a signal from the control device (24).

2. Operating apparatus (20) according to Claim 1, **characterized in that** verification with the base station (10) is performed using a challenge/response protocol.

3. Operating apparatus (20) according to one of the preceding claims, **characterized in that** reciprocal verification is performed between the operating apparatus (20) and the base station (10).

4. Operating apparatus (20) according to one of the preceding claims, **characterized in that** the control device (24) has an associated memory device (25) storing at least one serial-number data item.

5. Operating apparatus (20) according to one of the preceding claims, **characterized in that** the communication between the operating apparatus (20) and the base station (10) takes place contactlessly using infrared or radio-frequency signals.

6. Authorization system, comprising at least one operating apparatus (20)
- having a respective transmission/reception device (21) for receiving signals which are sent by a base station (10) and for sending signals to the base station (10),
- having a respective decoding device (22) which decodes the signals which are sent by the base station (10),
- having a respective control device (24) which processes the signals arriving via the transmission/reception device (21) and the decoding device (22),
- having a respective coding device (23) which uses a key code to code the signals which are to be sent to the base station (10), and
- having a base station (10) comprising
- a control device (13),
- a transmission/reception device (11) for communicating with the at least one operating apparatus (20) and a coding and decoding device (14, 12) which uses a key code to perform coding/decoding, where the base station (10) sends a command signal to the at least one operating apparatus (20), on the basis of which a selection device (29) in the at least one operating apparatus (20) is designed to select the key code from at least two key codes of different length, and the selection device (29) in the at least one operating apparatus (20) is designed to select a key code on the basis of a signal from the control device (24).

7. Multistage authorization system having at least one operating apparatus (20) according to one of Claims 1 to 5 and at least two base stations (10), where the base stations (10) store key codes of different length,
**characterized in that**
the at least one operating apparatus (20) has, for each base station (10), a memory (31, 31') which stores the key code which corresponds to the base station (10), where, for a first authorization stage, a key code of word length N which is stored in the memory (31) in the operating apparatus (20) is associated with the first base station (10) and, for the at least one other authorization stage, a key code of word length M which is stored in the memory (31') in the operating apparatus (20) is associated with the at least one other base station (10).

8. Multistage authorization system according to Claim 7, **characterized in that** the word length M of the key code which is associated with the at least one other base station (10) is much longer than the word length N of the key code which is associated with the first base station (10).

## Revendications

1. Dispositif d'actionnement (20) pour un système d'autorisation comprenant :
- un dispositif d'émission/de réception (21) pour recevoir des signaux émis par une station de base (10) et émettre des signaux à la station de base (10),
- un dispositif de décodage (22) qui décode les signaux émis par la station de base (10),
- un dispositif de commande (24) qui traite les signaux entrant par le dispositif d'émission/de réception (21) et le dispositif de décodage (22),
- un dispositif de codage (23) qui exécute un codage des signaux à émettre à la station de base (10) à l'aide d'un code clé,
**caractérisé par**
- un dispositif de sélection (29) qui détermine la longueur de mot du signal à émettre en ce que le dispositif de sélection (29), pour sélectionner le code clé, est configuré à partir d'au moins deux codes clés de différentes longueurs, et le dispositif de sélection (29) est en outre configuré pour sélectionner un code clé en fonction d'un signal du dispositif de commande (24).

2. Dispositif d'actionnement (20) selon la revendication 1,
**caractérisé en ce qu'**
une vérification avec la station de base (10) est effectuée au moyen d'un protocole de demande/réponse (challenge-response).

3. Dispositif d'actionnement (20) selon l'une quelconque des revendications précédentes,
**caractérisé en ce qu'**
une vérification réciproque est effectuée entre le dispositif d'actionnement (20) et la station de base (10).

4. Dispositif d'actionnement (20) selon l'une quelconque des revendications précédentes,
**caractérisé en ce qu'**
au dispositif de commande (24) est associé un dispositif de mémoire (25) dans lequel est stocké au moins une donnée de numéro de série.

5. Dispositif d'actionnement (20) selon l'une quelconque des revendications précédentes,
**caractérisé en ce que**
la communication entre le dispositif d'actionnement (20) et la station de base (10) est réalisée sans contact au moyen de signaux infrarouges ou haute fréquence.

6. Système d'autorisation constitué par
• au moins un dispositif d'actionnement (20) comprenant :
- chaque fois un dispositif d'émission/de réception (21) pour recevoir des signaux émis par une station de base (10) et émettre des signaux à la station de base (10),
- chaque fois un dispositif de décodage (22) qui décode les signaux émis par la station de base (10),
- chaque fois un dispositif de commande (24) qui traite les signaux entrant par le dispositif d'émission/de réception (21) et le dispositif de décodage (22), et
- chaque fois un dispositif de codage (23) qui exécute un codage des signaux à émettre à la station de base (10) à l'aide d'un code clé, et
• une station de base (10) comprenant :
- un dispositif de commande (13),
- un dispositif d'émission/de réception (11) pour la communication avec l'au moins un dispositif d'actionnement (20) et un dispositif de codage/de décodage (14, 12) qui exécute un codage/décodage au moyen d'un code clé,
**caractérisé en ce que**
la station de base (10) émet un signal de commande à l'au moins un dispositif d'actionnement (20), en fonction duquel un dispositif de sélection (29) de l'au moins un dispositif d'actionnement (20), pour sélectionner le code clé, est configuré par au moins deux codes clés de différentes longueurs, et le dispositif de sélection (29) de l'au moins un dispositif d'actionnement (20) est en outre configuré pour sélectionner un code clé en fonction d'un signal du dispositif de commande (24).

7. Système d'autorisation à plusieurs niveaux comprenant au moins un dispositif d'actionnement (20) selon l'une quelconque des revendications 1 à 5, et au moins deux stations de base (10), les stations de base (10) stockant des codes clés de différentes longueurs,
**caractérisé en ce que**
l'au moins un dispositif d'actionnement (20) présente pour chaque station de base (10) une mémoire (31, 31') qui stocke le code clé correspondant à la station de base (10), un code clé d'une longueur de mot N stocké dans la mémoire (31) du dispositif d'actionnement (20) pour un premier niveau d'autorisation étant associé à la première station de base (10), et un code clé d'une longueur de mot M stocké dans la mémoire (31') du dispositif d'actionnement (20) pour l'au moins un autre niveau d'autorisation étant associé à l'au moins une autre station de base (10).

8. Système d'autorisation à plusieurs niveaux selon la revendication 7,
**caractérisé en ce que**
la longueur de mot M des codes clés associés à l'au moins une autre station de base (10) est nettement plus grande que la longueur de mot N du code clé associé à la première station de base (10).
